# EUROPEAN PATENT APPLICATION

(11) **EP 4 253 916 A1**
(43) Date of publication of application: **04.10.2023**
(21) Application number: 22275041.6
(22) Date of filing: 01.04.2022
(51) Int. Cl.: G01D 5/244

(54) **METHOD OF MOUNTING A ROTARY SCALE MEMBER**

(71) Applicant: Renishaw PLC, Wotton-under-Edge, Gloucestershire GL12 8JR (GB)
(72) Inventor: The designation of the inventor has not yet been filed
(74) Representative: Rolfe, Edward William

(57) **Abstract**

A method of mounting a rotary scale member on a part, the part being rotatable about an axis of rotation, the rotary scale member comprising a body on which a series of scale features defining a scale that extends around a scale axis is or can be provided. The method comprises: i) mount on the part one or more intermediate scale-positioning members and manipulating the radial configuration thereof until a desired radial configuration with respect to the axis of rotation is achieved; and ii) subsequently fitting the rotary scale member onto the one or more intermediate scale-positioning members, whereby the body of the rotary scale member adopts a default radial location with respect to the one or more intermediate scale-positioning members.

## Description

This invention relates to a method of mounting a rotary scale member, for use with a rotary encoder, on a part of an apparatus, for example on a machine part.

Metrological scales are used in the position measurement of relatively moveable parts of an apparatus, for example relatively moveable parts of a machine. Metrological scale typically has a series of features on it which can be read by a readhead so that the readhead can provide a measure of its position along, or around, the scale. The metrological scale can be mounted onto one part of an apparatus and is read by a suitable readhead which is attached to another part of the apparatus. Relative movement between the two parts of the apparatus can be measured by the readhead. Types of metrological scale include magnetic scales (in which the scale features are provided by features having particular magnetic properties), capacitive scales (in which the features are provided by features having particular capacitive properties), inductive scales (in which the features are provided by features having particular inductive properties) and optical scales (in which the features are provided by features having particular optical properties). Optical scales can be transmissive or reflective. An example of an optical scale configuration is disclosed in EP-A-0 207 121 and also US-A-4,974,962.

For measuring relative rotary displacement of parts of an apparatus about an axis of rotation, a scale may be provided on a rotary scale member which is mounted on one of the parts of the apparatus, and a readhead configured to read the scale may be provided on the other part. Typically, the rotary scale member is in the form of a disc scale member or a ring scale member. In either case, the rotary scale member comprises a body on which a series of scale features defining a scale that extends around a scale axis is or can be provided. Typically, the rotary scale member is mounted on the part of the apparatus that rotates, whilst the readhead head is mounted on a stationary part of the apparatus, but this need not necessarily be the case and it can be the other way around.

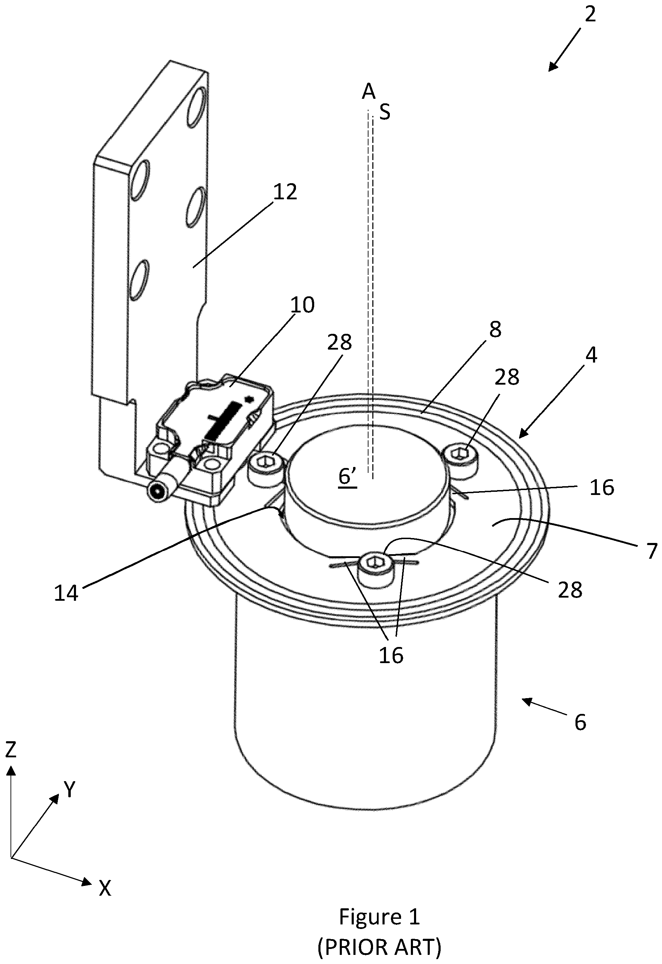

Figure 1 illustrates a prior art configuration of an encoder apparatus 2 (described in more detail in WO2021-116660) comprising a rotary scale member 4, which in the form shown is a disc scale member, and readhead 10. The readhead 10 is mounted on a fixed component 12 of an apparatus, and the disc scale member 4 is mounted on a shaft 6' of a part 6 of the apparatus which can rotate about an axis of rotation A. The disc scale member 4 comprises a substantially planar body 7 having a scale track 8 on one of its planar faces, extending completely annularly around a scale axis S. The scale track 8 comprises a series of features which a readhead 10 (mounted on a component 12 which is fixed relative to the cylindrical shaft 6) can read to determine the relative position/motion of the disc scale member 4 and the readhead 10. A hole 14 is provided through the middle of the planar body 7, through which the cylindrical shaft 6' can extend when the disc scale member 4 is mounted on the cylindrical shaft 6'. The disc scale member 4 further comprises three pairs of resiliently compliant members (in this embodiment cantilevered spring/flexure members) 16 which are spaced around the edge of the hole 14, for engaging with, and radially locating the disc scale member 4 on, the cylindrical shaft 6' when it is inserted therethrough.

The three pairs of cantilevered spring members 16 define a default inner periphery diameter of the hole 14 which is smaller than the diameter of the shaft 6'. Accordingly, the disc scale member 4 needs to be force-fitted onto the shaft 6', whereby the shaft 6' engages the side of each of the cantilevered spring members 16 facing the middle of the hole 14, and causes each of them to bend slightly radially outwardly. The elasticity of the material of the cantilevered spring members 16 causes a radial reaction force on the shaft 6', thereby causing a radial self-locating effect. If the reaction force provided by each cantilevered spring member 16 is nominally the same, the disc scale member 4 will nominally self-centre on the shaft 6'. Accordingly, if it is desired that the scale axis S and axis of rotation A are substantially coaxial, then the disc scale member 4 should be configured such that the scale axis S lies on the point/axis which the cantilevered spring members 16 cause the disc scale member to be centred on.

If desired, the planar body 7 of the disc scale member 4 can be further secured to the shaft. For example, in the embodiment described, the planar body 7 comprises three holes through which mechanical fasteners 28, such as bolts 28, can be passed in order to secure the planar body 7 to the shaft 6.

As schematically depicted in Figure 1, even with such self-locating (e.g. self-centring) functionality, and despite best efforts to manufacture the rotary scale member 4 and shaft 6' as accurately as possible, it is quite possible that the relative positions of the axis of rotation A and the scale axis S are not as intended/desired (e.g. are not co-axial), which can lead to measurement errors if not rectified and/or compensated for. For example, for those embodiments in which it is desired that the scale axis S and axis of rotation A are coaxial and the cantilevered spring members 16 are configured to self-centre the disc scale member 4, it is quite possible that there will be at least some offset between the axis of rotation A and the scale axis S. In many instances this is at least predominantly due to the axis of rotation A and the geometric centre of the shaft 6' not being coincident.

Accordingly, it is known to adjust a rotary scale member after it has been mounted on the apparatus, such as described in EP1094302 and WO2004/008076. The present invention provides an effective alternative technique for improving the mounting of a rotary scale member on a part of an apparatus.

According to a first aspect of the invention there is provided a method of mounting a rotary scale member on a first part of an apparatus, wherein the first part and a second part of the apparatus are relatively rotatable about an axis of rotation, the rotary scale member comprising a body on which a series of scale features defining a scale that extends around a scale axis is or can be provided, the method comprising: i) mounting on the first part of the apparatus one or more intermediate scale-positioning members and manipulating the radial configuration of at least one of the one or more intermediate scale-positioning members until a desired radial configuration of the one or more intermediate scale-positioning members with respect to the axis of rotation is achieved; and ii) subsequently fitting the rotary scale member onto the one or more intermediate scale-positioning members, whereby the body of the rotary scale member is radially located at a default (in other words "predetermined") radial location/position with respect to the one or more intermediate scale-positioning members.

As will be understood, the one or more intermediate scale-positioning members control/dictate the radial location/position of the rotary scale member fitted thereto, relative to the first part of the apparatus. Accordingly, the one or more intermediate scale-positioning members could be referred to as one or more intermediate radial scale-positioning members, but for brevity are herein referred to as intermediate scale-positioning members. As will be understood, the one or more intermediate scale-positioning members could be mounted directly on the first part of the apparatus, or mounted indirectly on the first part of the apparatus (e.g. via another member/device such as support member/device which is itself directly mounted to the first part of the apparatus).

Benefits of the method of the present invention can include increased ease of manufacture of the rotary scale member and/or reduction of risk of damage to the scale carrying part of the rotary scale member compared to known techniques which provide for radial adjustability. For example, with the present invention, it is not necessary to provide the rotary scale member with features which facilitate radial adjustment of itself, thereby simplifying the rotary scale member and its manufacture. Furthermore, since it is the intermediate scale-positioning member which is being manipulated until a desired radial configuration is achieved, then it is not necessary to inspect the radial configuration of the rotary scale member. This can lead to the benefits of ease of manufacture thereof (because it is not necessary to provide an accurate reference surface thereon for inspection) and/or can reduce/avoid risk of damage to the rotary scale member which might be caused by such inspection.

As will be understood, and as described in more detail below, the rotary scale member and the one or more intermediate scale-positioning members interact with each other (e.g. features thereof interact with each other) so as to thereby cause the rotary scale member to be radially located at the default (predetermined) radial location/position with respect to the one or more intermediate scale-positioning members.

As will be understood, in accordance with the invention, it could be said that the fitting of the rotary scale member onto the one or more intermediate scale-positioning members causes the radial location of the body of the rotary scale member to be automatically radially located at said default radial location. The body of the rotary scale member could be said to (automatically) adopt (or "is caused to adopt"), or in other words, "assume"; for example it "come to rest at" or for instance "is radially biased to" or "is radially constrained at", said default (predetermined) radial location with respect to the one or more intermediate scale-positioning members.

As will be understood, the default (predetermined) radial location/position can be the radial position at which the body of the rotary scale member will naturally/automatically reside at (and return to) relative to the one or more intermediate scale-positioning members in the absence of (or removal of) any external radial force applied thereto. The default (predetermined) radial location/position could be referred to as a repeatable radial location/position (i.e. it is repeatable with respect to the one or more intermediate scale-positioning members).

The apparatus could be a machine. Accordingly, the first part of the apparatus on which the rotary scale member is mounted could be a machine part. The apparatus could comprise an encoder mount (e.g. which is to be subsequently mounted onto another device), for example the apparatus could comprise a housing for an enclosed encoder apparatus. Accordingly, the first part could comprise one part of the housing for an enclosed encoder apparatus.

The first part could be the part of the apparatus that is configured, in use/operation, to rotate about said axis of rotation, and the second part could be configured to remain stationary/be rotationally fixed about said axis of rotation. This can be preferred because a readhead for reading the scale on the rotary scale member could be attached to the stationary/rotationally fixed part which can be easier from an assembly/cabling point of view. However, this need not necessarily be the case and the second part could be the part of the apparatus that, in use/operation, rotates about said axis of rotation, and the first part (on which the rotary scale member is mounted) could remain stationary/is rotationally fixed about said axis of rotation.

The body of the rotary scale member could comprise an annular body. The body, e.g. the annular body, can comprise a planar disc. Optionally, such a planar disc is not more than 5mm thick, for instance not more than 3mm thick, for example about 1 mm thick. The series of position features can be provided on a planar face of the body of the rotary scale member (e.g. on a planar face of a planar disc) (as opposed to on an axially-extending peripheral edge, which is more commonly associated with a ring scale/encoder). Accordingly, the rotary scale member can comprise a disc scale member (which can also, interchangeably, be referred to as a scale disc member) (e.g. for a disc encoder). The disc scale member comprising a planar surface on which the series of scale features defining a scale is or can be provided, the scale axis extending normal to the planar surface. Accordingly, the scale features could be radially-extending scale features. For example, the scale features could be elongate in the radial direction, e.g. each scale feature could comprise a line which extends radially, (with respect to the scale axis). In an alternative embodiment, the rotary scale member comprises a ring scale member wherein the series of position features are provided on an axially-extending peripheral edge of the body.

The body of the rotary scale member could comprise a metallic material, but as will be understood, other non-metallic materials could be used.

The scale could comprise optical, capacitive, inductive and/or magnetic scale features. As will be understood, references herein to "light" and "optical" encompasses electromagnetic radiation (EMR) anywhere in the infra-red to the ultra-violet range. In particular in the case of optical scale features, the scale could be a reflective or transmissive scale.

Preferably the scale comprises a complete annular track of scale features (e.g. as opposed to just comprising a partial arc). The scale features in a track could comprise incremental scale features (with or without one or more reference marks) or absolute scale features. The rotary scale member could comprise more than one series (e.g. more than one track) of scale features.

The method can additionally comprise: iii) subsequently securing the body of the rotary scale member so as to fix its radial location/position with respect to the first part of the apparatus. This could be achieved by securing the body of the rotary scale member to the first part of the apparatus. This could be achieved via one or more mechanical fasteners (e.g. one or more bolts and/or clamps) and/or via adhesive. Preferably, the body of the rotary scale is secured/fixed with respect to the first part of the apparatus with body of the rotary scale at the default radial location at which it is located at in step ii) (i.e. it is not radially moved away from said default radial location before the securing step of iii). Of course, additional tweaking of the radial location of the body of the rotary scale member could take place before it is fixed/secured so as to move it away from the default radial location at which it is located in step ii), but this is generally not desirable and negates at least some of the advantages of the invention.

The method can additionally comprise: iv) removing the one or more intermediate scale-positioning members. As will be understood, the body of the rotary scale member can maintain its radial location/position owing to it having been secured so as to fix its radial location/position in step iii). Removing the one or more intermediate scale-positioning members can provide the benefit that the one or more intermediate scale-positioning members can be reused. Removing the one or more intermediate scale-positioning members can also provide benefits in terms of reducing the mass on the first part of the apparatus and/or improving space/access on the first part (e.g. once removed, the one or more intermediate scale-positioning members no longer take up space and so there can be more space/better access for other components).

Step i) can comprise checking the radial configuration of the one or more intermediate scale-positioning members. This can comprise determining the (e.g. radial) position of at least a part/surface/feature of the one or more intermediate scale-positioning members in order to determine the radial configuration thereof. In particular, step i) can comprise determining (and for example directly measuring) the (e.g. radial) position of that (those) part(s)/surface(s)/feature(s) of the one or more intermediate scale-positioning members against which the rotary scale member is configured to engage so as to be fitted thereon, in order to determine the radial configuration thereof.

The above-mentioned step of determining the (e.g. radial) position of at least a part/surface/feature of the one or more intermediate scale-positioning members, can comprise measuring the (e.g. radial) position of at least a part/surface/feature of the one or more intermediate scale-positioning members in a plane extending perpendicular to the axis of rotation (and can, for example, comprise directly measuring the position of that (those) part(s)/surface(s)/feature(s) of the one or more intermediate scale-positioning members against which the rotary scale member is configured to engage so as to be fitted thereon, in said plane extending perpendicular to the axis of rotation). Determining/measuring the position can comprise determining/measuring the radial position (e.g. with respect to the axis of rotation) of at least a part/feature/surface of the one or more intermediate scale-positioning members.

Checking/determining/measuring the position can comprise using an inspection tool/sensor. Checking/determining/measuring the position can, for example, comprise directly measuring the (e.g. radial) position of that (those) part(s)/surface(s)/feature(s) of the one or more intermediate scale-positioning members against which the rotary scale member is configured to engage so as to be fitted thereon. The inspection tool/sensor could comprise a contact tool/sensor which contacts a part/surface/feature (e.g. an axially-extending part/surface) of the one or more intermediate scale-positioning members. The inspection tool/sensor could comprise a non-contact tool/sensor (e.g. which obtains such measurements without contacting the one or more intermediate scale-positioning members).

Step i) can comprise determining the change/difference in apparent radius of at least a part/surface/feature of the one or more intermediate scale-positioning members with respect to the axis of rotation, at at least three, different annularly spaced locations (i.e. different spaced locations around the axis). Such measurements at different annularly spaced locations can be obtained by keeping the inspection tool/sensor at a fixed rotational position about the axis of rotation, and rotating the one or more intermediate scale-positioning members about the axis of rotation so that the inspection tool/sensor can obtain measurements at the different annularly spaced locations of the one or more intermediate scale-positioning members.

The above-described measurements could be performed/taken whilst the first part of the apparatus and one or more intermediate scale-positioning members mounted thereon is rotating (if the first part is the rotatable part of the apparatus), or could be performed/taken when the first part of the apparatus and one or more intermediate scale-positioning members mounted thereon are stationary.

The rotary scale member and the one or more intermediate scale-positioning members can be configured to engage each other at at least two, preferably at at least three engagement locations (e.g. regions) which are annularly spaced around the axis of rotation. The at least two, preferably at least three engagement locations can be predetermined engagement locations (regions). The (e.g. predetermined) at least two, preferably at least three engagement locations (regions) can be (e.g. substantially-equiangularly) annularly spaced around the axis of rotation. It has been found that three or four, substantially-equiangularly spaced, engagement locations (regions) can be preferred. The method can comprise determining the (e.g. radial) position of the at least two, preferably at least three engagement locations (regions) on the one or more intermediate scale-positioning members, in order to determine the radial configuration thereof. As will be understood, and as explained in more detail below, there can be more than one point of contact between the rotary scale member and the one or more intermediate scale-positioning member at any given engagement location (region). For example, in the embodiments in which the discrete mounting features comprise a pair of cantilevered spring members, the free ends of which are proximal each other, there will be two points of contact at the engagement location (one on each cantilevered spring member). Nevertheless, it can be sufficient that only one measurement of the (radial) position of an engagement location (region) is performed, even if there is more than one point of contact between the between the rotary scale member and the one or more intermediate scale-positioning member at any given engagement location, but of course more than one measurement can be performed if desired.

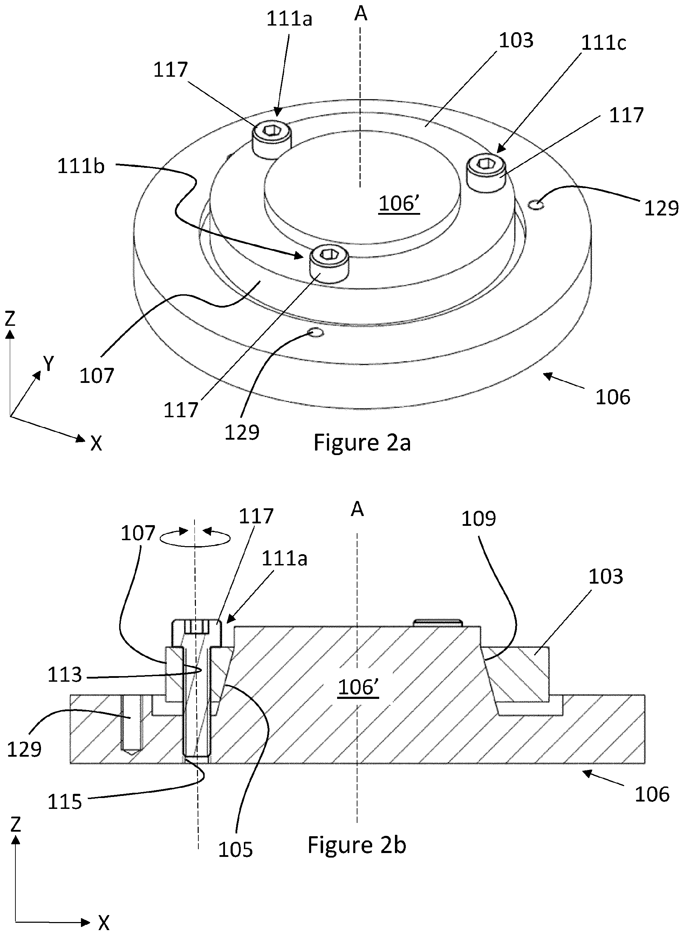

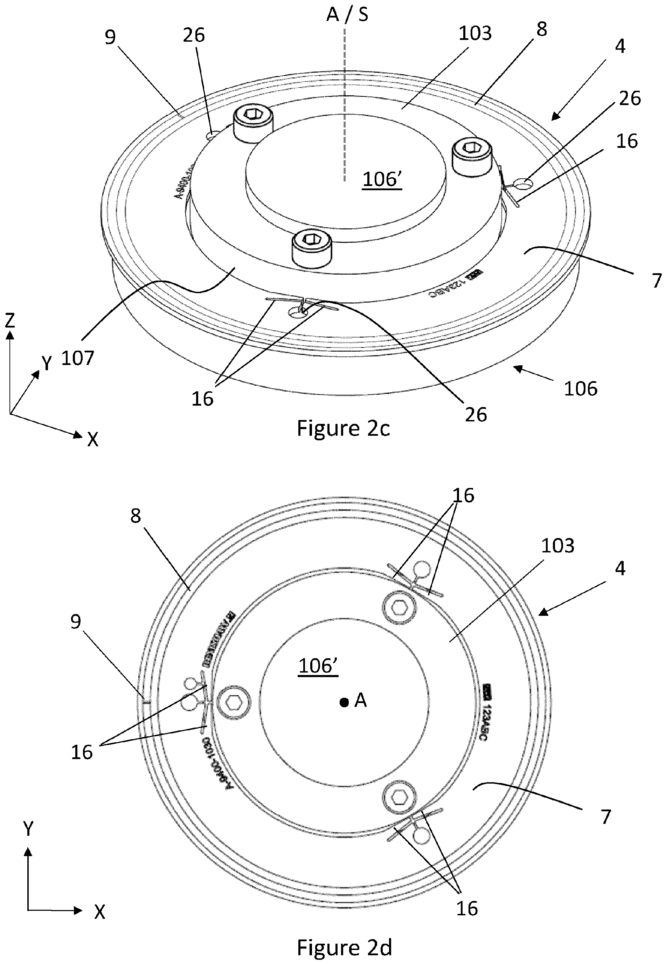

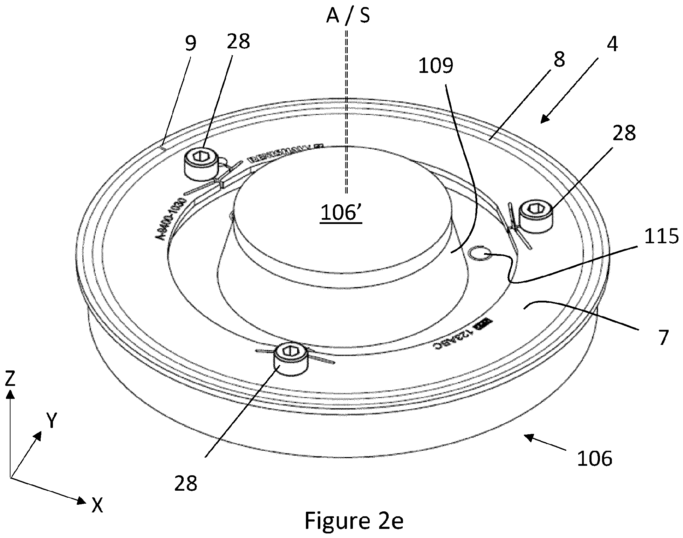

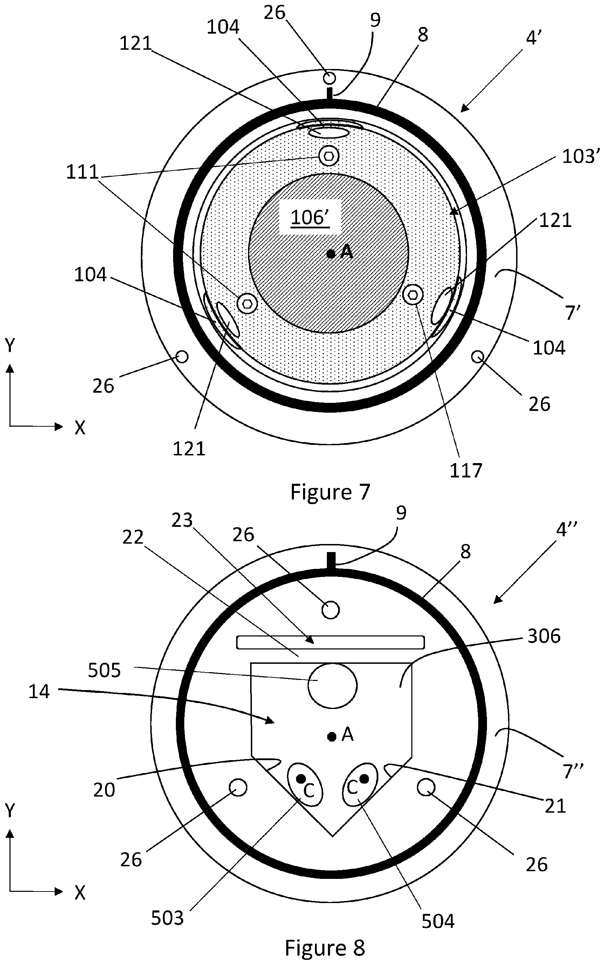

At least one of the engagement locations can be a rigid engagement location (e.g. provided by (e.g. radially) rigid, non-compliant features/surfaces on the rotary scale member and the one or more intermediate scale-positioning members). At least one of the engagement locations can be a (e.g. radially) resiliently compliant engagement location (e.g. provided by a resiliently compliant member, for instance provided on the rotary scale member and/or the one or more intermediate scale-positioning members, as described in more detail below). A combination of rigid and resiliently compliant engagement locations can be provided. The resiliently compliant engagement location can be configured such that the body of the rotary scale member is biased by the resiliently compliant engagement location into/against the rigid engagement location(s), such that the rigid engagement location(s) thereby define the default radial position of the body of the rotary scale member relative to the one or more intermediate scale-positioning members. In a particular example, at least two of the engagement locations can be rigid engagement locations, and at least one of the engagement locations can be a resiliently compliant engagement location. For example, as described by way of example in more detail below in connection with Figure 8, two of the engagement locations can be rigid engagement locations, and one of the engagement locations can be a resiliently compliant engagement location. In other embodiments, (for example, as described in more detail below in connection with Figures 2 to 8) all of the engagement locations can be resiliently compliant engagement locations. It has been found that three or four, (e.g. substantially-equiangularly) annularly spaced, resiliently compliant engagement locations (regions) can be preferred. As described in more detail below, resiliently compliant engagement locations can be provided by one or more resiliently compliant members (e.g. a single flexure, or a plurality, e.g. pair of flexures/cantilevered spring members acting together/as one).

The rotary scale member (and/or the one or more intermediate scale-positioning members) can comprise a plurality of discrete mounting features configured such that, at step ii), the rotary scale member and the one or more intermediate scale-positioning members engage each other at at least two, preferably at at least three (predetermined) engagement locations which are annularly spaced around the axis of rotation. A discrete mounting feature could comprise a rigid feature/member or a resiliently compliant feature/member.

The rotary scale member can be fitted to the one or more intermediate scale-positioning members via one or more resiliently compliant members, for example at least two, and in some instances preferably three of four, resiliently compliant members (or pairs thereof) provided at annularly spaced locations around the scale axis. The one or more resiliently compliant members can be configured to radially locate/position the rotary scale member at said default (predetermined) radial location/position with respect to the intermediate scale-positioning members. Such one or more resiliently compliant members could comprise radially and/or tangentially compliant members.

A discrete mounting feature of the rotary scale member can comprise a (e.g. radial and/or tangential) resiliently compliant member.

In an optional embodiment, the one or more intermediate scale-positioning members could comprise discrete mounting features, for example, resiliently compliant members, against which the rotary scale member is fitted.

A discrete mounting feature (in particular, a discrete mounting feature that comprises a resiliently compliant member) can comprise a spring member, for example a flexure, for instance a cantilevered spring member. Accordingly, for example, the rotary scale member can comprise at least three spring members (e.g. flexures, e.g. cantilevered spring members). A discrete mounting feature can comprise a plurality of mounting features acting together/as one; for example a discrete mounting feature can comprise a plurality (e.g. pair) of (e.g. cantilevered) spring members configured to provide a common spring force (e.g. in magnitude and direction) between the one or more intermediate scale-positioning members and the body of the rotary scale member. Accordingly, for example, the rotary scale member can be fitted to the one or more intermediate scale-positioning members via (e.g. the rotary scale member could comprise) at least three sets (e.g. pairs) of (e.g. cantilevered) spring members. Cantilevered spring members in a pair can extend in opposite directions to each other such that the free ends of the cantilevered spring members in a pair are proximal each other (e.g. sufficiently proximal that they can be considered as engaging the one or more intermediate scale-positioning member at substantially the same engagement location, and can be configured to provide substantially the same spring force (e.g. in magnitude and direction)).

The discrete mounting features (e.g. resiliently compliant members) can be formed integrally with the body of the rotary scale member (or integrally with the one or more intermediate scale-positioning members). Although this can be preferable, it is not essential. For example, the discrete mounting features (e.g. resiliently compliant members) could be formed separately from and secured to the body of the rotary scale member (or secured to the one or more intermediate scale-positioning members). In preferred embodiments, the discrete mounting features (e.g. the resiliently compliant members) are provided on/by the rotary scale member (as opposed to on/by the one or more intermediate scale-positioning members), and in particularly preferred embodiments the discrete mounting features (e.g. the resiliently compliant members) are formed integrally with the body of the rotary scale member).

The discrete mounting features (e.g. a resiliently compliant member) can be provided radially inward of the series of scale features. In an alternative embodiment, the discrete mounting features (e.g. a resiliently compliant member) can be provided radially outward of the series of scale features.

The method can comprise force-fitting the rotary scale member and the at least one intermediate scale-positioning member together. The rotary scale member and one or more intermediate scale-positioning members can be configured such that the act of force-fitting the rotary scale member and the at least one intermediate scale-positioning member together causes one or more (e.g. at least two, and in some instances preferably three of four, resiliently compliant members (or pairs thereof) to be displaced and thereby urge the rotary scale member, via a (e.g. radial) reaction force, into engagement with the one or more intermediate scale-positioning members such that the body of the rotary scale member is radially located at (e.g. adopts/comes to rest at/is biased to) the default (predetermined) radial location/position with respect to the one or more intermediate scale-positioning members.

Step i) can comprise arranging on the first part of the apparatus, at at least two, for example at at least three, (e.g. substantially equiangular) annularly spaced locations around the axis of rotation, separate intermediate scale-positioning members, the radial configuration of at least one of which can be manipulated independently of the other(s) (and for example, the radial configuration of each of which can be manipulated independently). In an alternative embodiment, and in contrast to the use of such a plurality of (e.g. separate) intermediate scale-positioning members, the radial configuration of which can be manipulated independently, step i) could comprise arranging on the first part of the apparatus a unitary intermediate scale-positioning member which provides, at at least three (e.g. substantially equiangular) annularly spaced locations around the axis of rotation, a surface for receiving the rotary scale member. As will be understood, a unitary intermediate scale-positioning member could be made up of a plurality of parts/components. A unitary intermediate scale-positioning member made up of a plurality of parts/components could, for instance, be handled as one unit/member, for example located on the first part of the apparatus as one unit. The unitary intermediate scale-positioning member could comprise, for example, an annular intermediate scale-positioning member, which comprises a (continuous) annularly extending surface against which the rotary scale member is configured to be fitted at at least three (e.g. substantially equiangular) annularly spaced locations around the axis of rotation. The continuous surface need not have a regular cross-sectional shape (viewed perpendicular to the axis of rotation/scale axis). In one embodiment, the annular intermediate scale-positioning member can comprise a substantially circular intermediate scale-positioning member which extends around the axis of rotation when mounted on the first part of the apparatus, such as a ring or disc-like intermediate scale-positioning member. Accordingly, the annular unitary intermediate scale-positioning member could comprise a substantially circular surface, which extends around the axis of rotation when mounted on the first part of the apparatus, for receiving the rotary scale member. The unitary intermediate scale-positioning member could be configured such that manipulation of the radial configuration of the unitary intermediate scale-positioning member causes the radial configuration of all of the at at least three annularly spaced locations that the radial configuration to be manipulated at the same time/simultaneously.

Step i) can comprise inspecting an axially-extending surface of the one or more intermediate scale-positioning members, in order to determine the radial configuration thereof. The axially-extending surface could comprise an outer (e.g. the outermost) perimeter/edge (e.g. circumferential edge) of an intermediate scale-positioning member. The axially-extending surface can have a substantially circular cross-sectional shape (viewed perpendicular to the axis of rotation/scale axis). When mounted on the first part of the apparatus, the axially-extending surface of the intermediate scale-positioning member could extend substantially parallel to the axis of rotation. The axially-extending surface could have a substantially cylindrical form, for example. In an alternative embodiment, the axially-extending surface could have non-cylindrical form, for example a substantially frustoconical form, or a substantially frustospherical form.

The desired radial configuration of the one or more intermediate scale-positioning members can be that configuration which ensures that when the rotary scale member is fitted thereon at step ii), the scale axis and axis of rotation of the first part of the apparatus are at a desired positional relationship, for example are substantially co-axial.

As mentioned above, the rotary scale member and the one or more intermediate scale-positioning members can be configured to engage each other at at least three engagement locations (e.g. regions) which are annularly spaced around the axis of rotation. The desired radial configuration can be that configuration at which the centre-point of those at least three engagement locations is substantially coincident with the axis of rotation.

As will be understood, the scale features can be readable by a readhead. Accordingly, the method can additionally comprise, at any appropriate stage, mounting a readhead configured to read the rotary scale member's scale features on the second part of the apparatus (e.g. machine). Accordingly, the method can comprise a method of assembling or mounting an encoder, the encoder comprising a rotary scale member as described above and/or below, and a readhead.

According to a second aspect of the invention there is provided a method of mounting a rotary scale member on a first part of an apparatus (e.g. on a machine part), wherein the first part and a second part of the apparatus are relatively rotatable about an axis of rotation, the rotary scale member comprising a body on which a series of scale features defining a scale that extends around a scale axis is or can be provided, the method comprising, in any suitable order: i) mounting on the first part of the apparatus one or more intermediate scale-positioning members; ii) fitting the rotary scale member onto the one or more intermediate scale-positioning members via (e.g. one or more) resiliently compliant members which are configured to (automatically) radially locate/position the rotary scale member at a default (predetermined) radial location/position with respect to the intermediate scale-positioning members; iii) manipulating the radial configuration of at least one of the one or more intermediate scale-positioning members mounted on the first part of the apparatus until a desired radial configuration of the one or more scale-positioning intermediate scale-positioning members with respect to the axis of rotation is achieved. A benefit of this aspect of the invention can be that the (e.g. one or more) resiliently compliant members can help to isolate the rotary scale member from any significant form or shape deformation which might otherwise (in the absence of such resiliently compliant members) be imparted on the rotary scale member via the manipulation of the radial configuration of the one or more intermediate scale-positioning members, whilst ensuring that the rotary scale member (automatically) self-locates at/adopts a default (predetermined) radial location/position with respect to the one or more intermediate scale-positioning members.

As will be understood, in accordance with this aspect of the invention, step ii) can take place before step iii). Furthermore, in accordance with this aspect of the invention, step ii) could take place before step i). In those embodiments in which the rotary scale member is fitted onto the one or more intermediate scale-positioning members before at least one of the one or more intermediate scale-positioning members have been manipulated to the desired radial configuration, the radial configuration of the one or more intermediate scale-positioning members can be determined/checked by inspecting the one or more intermediate scale-positioning members and/or the rotary scale member. As will be understood, features described above in connection with the first aspect of the invention are equally applicable to the second aspect of the invention. Accordingly, for instance, the body of the rotary scale member can subsequently be secured so as to fix its radial location/position with respect to the first part of the apparatus, and optionally the one or more intermediate scale members can be removed. Similarly, fitting the rotary scale to the one or more intermediate scale members can comprise force-fitting them together whereby the (e.g. one or more) resiliently compliant mounting features are displaced and thereby urge the rotary scale member via a reaction force into engagement with the one or more intermediate scale-positioning members, such that the body of the rotary scale member is radially located at (e.g. adopts/comes to rest at/is biased to) the default (predetermined) radial location/position with respect to the at one or more intermediate scale-positioning members.

According to a third aspect of the invention there is provided an apparatus comprising: one or more intermediate scale-positioning members which can be mounted on a first part of a device (e.g. on a machine part) having said first part and a second part which are relatively rotatable about an axis of rotation, configured such that the radial configuration of at least one of the one or more intermediate scale-positioning members is manipulable with respect to the axis of rotation ; and a rotary scale member comprising a body on which a series of scale features defining a scale that extends around a scale axis is or can be provided, the rotary scale member being fittable to the one or more intermediate scale-positioning members such that the radial position of the rotary scale member with respect to the axis of rotation is controlled/dictated by the one or more intermediate scale-positioning members; characterised in that the rotary scale member is fittable to the one or more intermediate scale-positioning members via (e.g. one or more) resiliently compliant members which are configured to (automatically) radially locate/position the rotary scale member at a default (predetermined) radial location/position with respect to the intermediate scale-positioning members when the rotary scale member is fitted to the one or more intermediate scale-positioning members. As will be understood, features described above in connection with the first and second aspects of the invention are equally applicable to the third aspect of the invention. For example, the (e.g. one or more) resiliently compliant members could comprise radially and/or tangentially compliant members. The rotary scale member and/or the one or more intermediate scale-positioning members could comprise the resiliently compliant members. The rotary scale member can be fittable to the one or more intermediate scale-mount members via at least three resiliently compliant members, which are located at different, for example substantially equiangular, positions around the scale axis. The resiliently compliant members can comprise flexures. The apparatus can further comprise means (e.g. mechanical fasteners and/or adhesive) for securing the rotary scale member to the first part of the device independently of the one or more intermediate scale-positioning members, e.g. such that the one or more intermediate scale-positioning members can then be removed. The rotary scale member could be fitted to the one or more intermediate scale-positioning members such that the radial location/position of the rotary scale member with respect to the axis of rotation is controlled by the one or more intermediate scale-positioning members. As will be understood, the apparatus can comprise the at least the first part of the device (and optionally the second part fo the device), in which case the one or more intermediate scale-positioning members can be mounted on the first part of the device. The apparatus could comprise a readhead (e.g. mounted on the second part of the device) for reading the scale features.

This application also describes a rotary scale member comprising a body on which a series of scale features defining a scale that extends around a scale axis is or can be provided and a (e.g. radially) resiliently compliant member (e.g. a flexure) for radially pushing the body in a predetermined radial direction against one or more rigid stop surfaces provided by the rotary scale member. As will be understood, the resiliently compliant member and one or more rigid stop surfaces can be configured to engage one or more features of a first part of an apparatus, (e.g. of a machine part), the first part and a second part of the apparatus being relatively rotatable about an axis of rotation, and/or engage one or more intermediate (scale-positioning) members mounted on such a first part of an apparatus (e.g. machine). Such a configuration can provide for highly repeatable positioning of the body of the rotary scale member relative to the part of the apparatus on which it is to be mounted. Accordingly, a method of mounting a rotary scale member on a first part of the apparatus (the first part being relative rotatable with respect to a second part of the apparatus about an axis of rotation) can comprise force fitting the rotary scale member on features provided on the first part of the apparatus (wherein such features could be integral to the first part, e.g. could be the shaft itself, or could be intermediate scale-positioning members such as that described herein), whereby the resiliently compliant member is displaced and thereby urges the one or more rigid stop surfaces via a reaction force into engagement with the features provided on the first part of the apparatus, such that the body of the rotary scale member is (automatically) radially located at (e.g. adopts/is biased to) a default (predetermined) radial location with respect to the features provided on the first part of the apparatus, said default (predetermined) radial location being defined by the one or more rigid stop surfaces. The resiliently compliant member and the one or more rigid stop surfaces can be provided radially inward of the scale, e.g. around the edge of a hole extending axially through the body of the rotary scale member. The rotary scale member could comprise a disc scale member. The resiliently compliant member could be formed integrally with the body of the rotary scale member. The resiliently compliant member could comprise a leaf spring. The resiliently compliant member could comprise one or more cantilevered spring members.

Embodiments of the invention will now be described, by way of example only, with reference to the following drawings, in which:
Figure 1 shows a prior art configuration of an encoder apparatus comprising a self-locating (in particular, a self-centring) rotary scale member mounted to a shaft of an apparatus;
Figures 2a to 2e illustrate the apparatus and stages involved in mounting a rotary scale member to a part of an apparatus according to a first aspect of the invention;
Figures 3a to 3d illustrate the apparatus and stages involved in mounting a rotary scale member to a part of an apparatus according to a second aspect of the invention;
Figures 4a to 4d illustrate the apparatus and stages involved in mounting a rotary scale member to a part of an apparatus according to a third aspect of the invention;
Figures 5a to 5e illustrate the apparatus and stages involved in mounting a rotary scale member to a part of an apparatus according to a fourth aspect of the invention;
Figure 6 is a flow-chart of a method according to the present invention;
Figure 7 illustrates a configuration according to a fifth aspect of the invention; and
Figure 8 illustrates a configuration according to a sixth aspect of the invention.

As mentioned earlier in this document, it can be desirable to be able to selectively control the radial location/position of a rotary scale member mounted to a first part of an apparatus which is relatively rotatable with respect to a second part of the apparatus about an axis of rotation, such that the rotary scale member has a desired radial configuration with respect to the axis of rotation. In particular, it can be desirable for the scale axis of a scale provided on the rotary scale member to arranged at a desired radial location/position relative to the axis of rotation. For example, it is fairly typical, but does not need to be the case, that the desired radial configuration is such that the scale axis and axis of rotation are substantially coaxial. The below text describes various techniques in accordance with the present invention which have the aim of configuring the rotary scale member such that its axis of rotation is substantially coaxial with the axis of rotation, but as will be understood, this need not necessarily be the case and the method of the invention can be used to provide different desired radial configurations thereof.

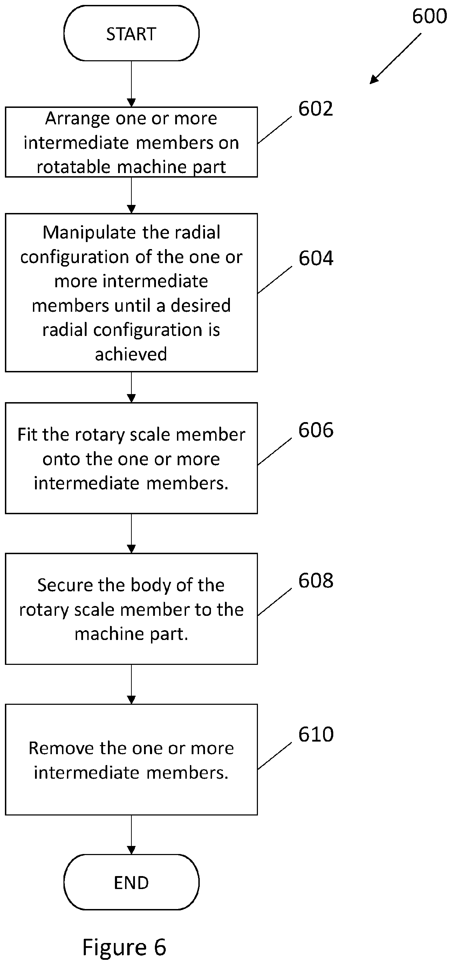

Referring to Figures 2a to 2e and also Figure 6 there is shown the apparatus and stages involved in mounting a rotary scale member (in this embodiment a disc scale member 4) to a part 106 of an apparatus in accordance with a first aspect of the invention.

Referring Figure 2a (which shows an isometric view of an intermediate scale-positioning member 103 mounted on the part 106), Figure 2b (which shows a cross-sectional view of the configuration of Figure 2a taken in the Z-X plane), and Figure 6, the method begins at step 602 by locating an intermediate scale-positioning member 103, in this embodiment a unitary intermediate scale-positioning member in the form of an annular ring, on the shaft 106' of the part 106. In this embodiment the intermediate annular ring member 103 comprises a metallic ring having a tapered inner circumferential surface 105 and a cylindrical outer circumferential surface 107. As will be understood, the intermediate annular ring member 103 could be made from other materials such as plastic.

As shown in Figure 2b, when the intermediate annular ring member 103 is mounted on the shaft 106', the tapered inner circumferential surface 105 of the intermediate annular ring member 103 engages an opposingly tapered surface 109 of the shaft 106'. The radial configuration of the intermediate annular ring member 103 can be determined/checked by measuring the intermediate annular ring member 103. For example, measurements of the position of the cylindrical outer surface 107 can be taken at a plurality of points around the intermediate annular ring member 103. This could be done in various ways, including for example, using a sensor, such as a dial test indicator (DTI), which interacts with the axially-extending cylindrical outer surface 107, to measure any variation in the radial position of the cylindrical outer surface 107 at differential rotational positions of the intermediate annular ring member 103. Such measurements could be obtained whilst the intermediate annular ring member 103 rotates about the axis of rotation A. Alternatively, such measurements could be obtained by moving the intermediate annular ring member 103 to different rotational orientations about the axis of rotation A and taking a measurement when the intermediate annular ring member 103 is stationary. In those two aforementioned methods, the sensor could be kept at a fixed location about the axis of rotation A. In another embodiment, such measurements could be obtained by keeping the intermediate annular ring member 103 stationary throughout the process of determining the radial configuration, and changing the location, around the axis of rotation A, at which the sensor interacts with the cylindrical outer surface 107 (e.g. by moving the same sensor or using multiple different sensors). As will be understood, rather than directly measuring the axially-extending cylindrical outer surface 107, the position thereof could be inferred by measuring a different part of the intermediate annular ring member 103.

If the radial configuration of the intermediate annular ring member 103 does not match the desired radial configuration, then at step 604, the radial configuration of the intermediate annular ring member 103 can be manipulated, as described in more detail below, until the desired radial configuration is reached. In this embodiment, the desired radial configuration of the intermediate annular ring member 103 is that radial configuration at which it is expected will cause the rotary scale member 4, which is to be subsequently mounted thereon (as described in more detail below), to automatically be radially located at (e.g. to adopt) a desired radial position with respect to the axis of rotation A when it is mounted on the intermediate annular ring member 103 (e.g. such that the scale axis of the rotary scale member is substantially coaxial with the axis of rotation A).

In the embodiment described, the radial configuration of the intermediate annular ring member 103 can be manipulated via a plurality of adjustment bolts 111(a, b, c). As shown in Figure 2b, an adjustment bolt (e.g. adjustment bolt 111a) passes through an axially-extending hole 113 in the intermediate annular ring member 103 and threadingly engages a threaded hole 115 in the part 106. Tightening of an adjustment bolt 111a by rotation thereof will ultimately cause the head 117 of the adjustment bolt 111a to engage the upper surface of the intermediate annular ring member 103, and further tightening of the adjustment bolt 111a will cause at least the portion of the intermediate annular ring member 103 adjacent the adjustment bolt 111a being manipulated to be displaced axially downward (in the orientation shown in Figure 2b). As will be understood, due to the engagement of the corresponding tapered surfaces 105, 107 of the intermediate annular ring member 103 and of the shaft 106', any downward axial displacement of the intermediate annular ring member 103 will also cause the portion of the intermediate annular ring member 103 adjacent the adjustment bolt 111a being manipulated to be displaced radially outward, thereby changing the radial configuration of the intermediate annular ring member 103.

As will be understood, in this embodiment, the shape of the intermediate annular ring member 103 is distorted by the above-described manipulation of the adjustment bolt (i.e. the above described action will stretch the intermediate annular ring member 103). In an alternative embodiment, the geometry of the shaft 106' and the inner surface of the intermediate annular ring member 103 can be configured (e.g. with mating frustospherical forms) such that the intermediate annular ring member 103 tends to rotate, i.e. roll, over the shaft when an adjustment bolts 111a is manipulated, wherein the degree of roll of the intermediate annular ring member 103 causes an effective change in the radial configuration of the surface against which the rotary scale member 4 will fit.

As depicted in Figures 2c to 2d, the rotary scale member 4 to be fitted on the intermediate annular ring member 103 can be the same as that described above in connection with Figure 1, and so like parts share the same reference numerals. As will be understood, this need not necessarily be the case and the rotary scale member can take a different form, such as, for example a ring scale member. Assuming that it is desired that the axis of rotation A and the scale axis S are nominally coaxial, the intermediate annular ring member 103 can, in this embodiment, be manipulated until the radial position of at least the points of the cylindrical outer surface 107 of the intermediate annular ring member 103 which the disc scale member's 4 cantilevered spring members 16 are configured to engage, are centred with respect to the axis of rotation A.

Once the operator/installer is satisfied that the intermediate annular ring member 103 is at the desired radial configuration with respect to the axis of rotation A, the disc scale member 4 can then be fitted onto the intermediate annular ring member 103 (step 606 of Figure 6). This is depicted in Figure 2c, which shows the disc scale member 4 fitted onto the intermediate annular ring member 103. Owing to, in this embodiment, the inner diameter of the hole 14 defined by the cantilevered spring members 16 being smaller than the diameter of the cylindrical outer surface 107 of the intermediate annular ring member 103, the rotary scale member 4 is force-fitted thereon, whereupon the cantilevered spring members 16 will radially engage, and be radially outwardly displaced by, the cylindrical outer surface 107 of the intermediate annular ring member 103, whereby the body 7 (and hence the scale 8 and the scale axis S) of the disc scale member 4 will automatically be radially located (e.g. it will automatically adopt/be biased to/constrained at) a default (predetermined) radial location/position with respect to the intermediate annular ring member 103. In this embodiment, the default (predetermined) radial location/position with respect to the intermediate annular ring member 103 will be dictated/controlled by the relative resilience of the cantilevered spring members 16. In a preferred embodiment, the cantilevered spring members 16 are nominally identical and have nominally the same resilience and therefore the body will self-centre on the intermediate annular ring member 103. In line with the above-described intention, owing to the configuration of the disc scale member 4 and to the prior deliberate manipulation of the radial configuration of the intermediate annular ring member 103 at step 604, when the disc scale member 4 has adopted (i.e. is located at) its default (predetermined) radial location/position with respect to the intermediate annular ring member 103, the scale axis S should be at a predetermined desired location/position with respect to the part 6 and its axis of rotation A, e.g. substantially coaxial therewith. Accordingly, no further adjustment of the radial configuration of the disc scale member 4 should be necessary.

Step 608 of Figure 6 is an additional optional step, which involves further securing the body 7 of the disc scale member 4 to the part 6, e.g. via adhesive (not shown) and/or via mechanical fasteners, such as bolts 28 (see Figure 2e) which pass through holes 26 in the body 7 of the disc scale member 4 and which threadingly engage threaded holes 129 (see Figure 2a and 2b) in the part 106. Step 610 of Figure 6 is a further optional step which involves removing the intermediate annular ring member 103. This can be beneficial because the intermediate annular ring member 103 can be reused, and/or because the space which the intermediate annular ring member 103 previously occupied can used for other means.

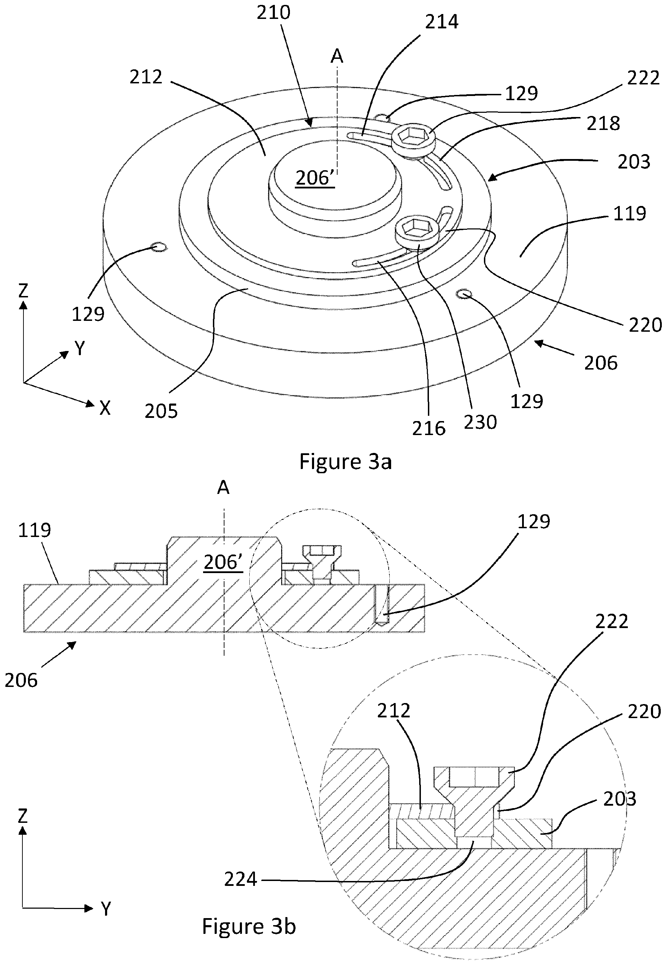

Figures 3a to 3d depict a variation of the apparatus shown in Figure 2 suitable for use with the present invention. Like parts share like reference numerals. The apparatus of Figures 3a to 3d differs from that of Figures 2a to 2e in that the shaft 206' and the intermediate annular ring member 203 do not have mating opposingly tapered surfaces. Rather, in this embodiment, the intermediate annular ring member 203 comprises an oversized annular ring which fits over the shaft 206' (i.e. its inner diameter is larger than the diameter of the shaft 206' such that it is a loose fit thereon) and is axially supported/held on a ledge 119 of the part 206 of the apparatus. Because the intermediate annular ring member 203 is a loose fit on the shaft 206', it can be easily shifted sideways (in the X-Y plane) so as to thereby change its radial configuration.

In this embodiment, an adjustment tool 210 is provided to aid an operator/installer to precisely control the manipulation of the radial configuration of the intermediate annular ring member 203. The adjustment tool 210 comprises a second annular ring member 212 which is a snug fit on the shaft 206', and sits on top of the intermediate annular ring member 203. The second annular ring member 212 comprises first 214 and second 216 elongate slots, the centres of which are annularly spaced apart from each other by 90°, and which are formed proximal the outer edge of the second annular ring member 212 so as to create first 218 and second 220 flexures.

A first bolt 222 having a tapered head is provided. The shank of the bolt 222 is received through the centre of the first slot 214 and threadingly engages a threaded hole 224 provided in the intermediate annular ring member 203. The first bolt 222 is tightened until its tapered head comes into contact with the top surface of the second annular ring member 212. Thereafter, further tightening of the first bolt 222 will drive its tapered head into the slot 214, and due to radial reaction forces between the first bolt 222, second annular ring member 212 and the shaft 206', the first bolt 222 will be pushed radially outwards (in the Y-dimension shown in Figures 3a and 3b), which, in turn will also cause the first flexure 218 to flex radially outward (in the Y-dimension). Owing to the connection between the first bolt 222 and the intermediate annular ring member 203, any such radial outward movement of the first bolt 222 will be imparted on the intermediate annular ring member 203, thereby radially displacing the radial position of the intermediate annular ring member 203 (in the Y-dimension).

As will be understood, due to the resistance of the first flexure 218 to being radially displaced, the first flexure 218 will cause the first bolt 222 to be pulled radially inward if/when the first bolt 222 is reversed out of the first slot 214, thereby reversing the radial displacement of the intermediate annular ring member 203 (along the Y-dimension).

A second bolt 230 is provided for location through the second slot 216, which is configured and operates in the same way as the first bolt 222 so as to facilitate adjustment of the radial position of the intermediate annular ring member 203 (in the X-dimension shown in Figures 3a and 3b). As will be understood, third and fourth slots (not shown) and corresponding bolts (not shown) could be provided at diametrically opposite locations to the first 214 and second 216 slots, so as to facilitate radial adjustment of the intermediate annular ring member 203 in opposite directions along the X and Y dimensions to that provided by the first 214 and second 216 slots and corresponding bolts 222, 230.

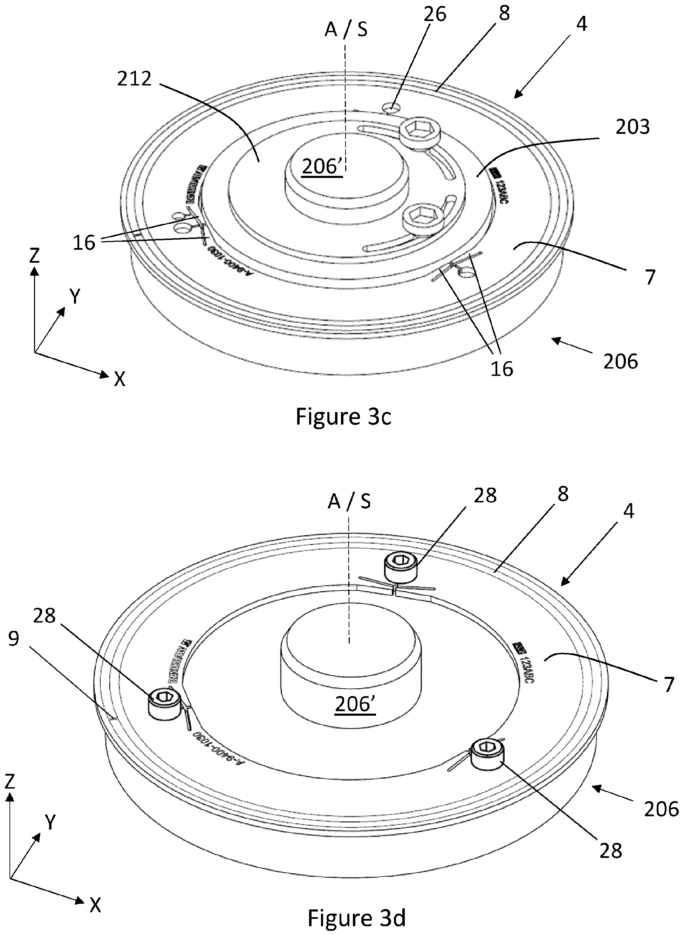

As with the first embodiment described in connection with Figure 2, the radial configuration of the intermediate annular ring member 203 can be checked, e.g. measured, to verify that it has the desired radial configuration. If not, further manipulation of the intermediate annular ring member 203 can take place until it has the desired radial configuration. Once it has the desired radial configuration, then as shown in Figure 3c, the disc scale member 4 can be fitted onto the outer cylindrical surface 205 of the intermediate annular ring member 203. As per the embodiment of Figure 2, the default inner diameter of the hole 14 defined by the cantilevered spring members 16 of the disc scale member 4 is smaller than the diameter of the cylindrical outer surface 205 of the intermediate annular ring member 203. Accordingly, in this embodiment, fitting the rotary scale member 4 onto the intermediate annular ring member 203 comprises force-fitting the rotary scale member 4 onto the intermediate annular ring member 203. Upon said fitting, the cantilevered spring members 16 will radially engage, and be radially outwardly displaced by, the cylindrical outer surface 205 of the intermediate annular ring member 203, whereby the body 7 (and hence the scale 8 and the scale axis S) of the disc scale member 4 will be automatically radially located at (in other words, caused to adopt/be biased to/constrained at) a default (predetermined) radial location with respect to the intermediate annular ring member 203. In line with the above-described intention, owing to the configuration of the disc scale member 4 and to due the prior deliberate manipulation of the radial configuration of the intermediate annular ring member 203, when the disc scale member 4 is located at/adopts its default (predetermined) radial location with respect to the intermediate annular ring member 203, the scale axis S should be at a predetermined desired location with respect to the axis of rotation A, e.g. substantially coaxial therewith. Accordingly, no further adjustment of the radial configuration of the disc scale member 4 should be necessary.

As depicted in Figure 3d, if desired, the body 7 of the disc scale member 4 can be secured to the part 206 of an apparatus, e.g. via adhesive (not shown) and/or via mechanical fasteners, such as bolts 28 which can threadingly engage threaded holes 129 (see Figures 3a and 3b) in the part 206. Furthermore, optionally, the intermediate annular ring member 203 and/or the associated tool 210 can be removed.

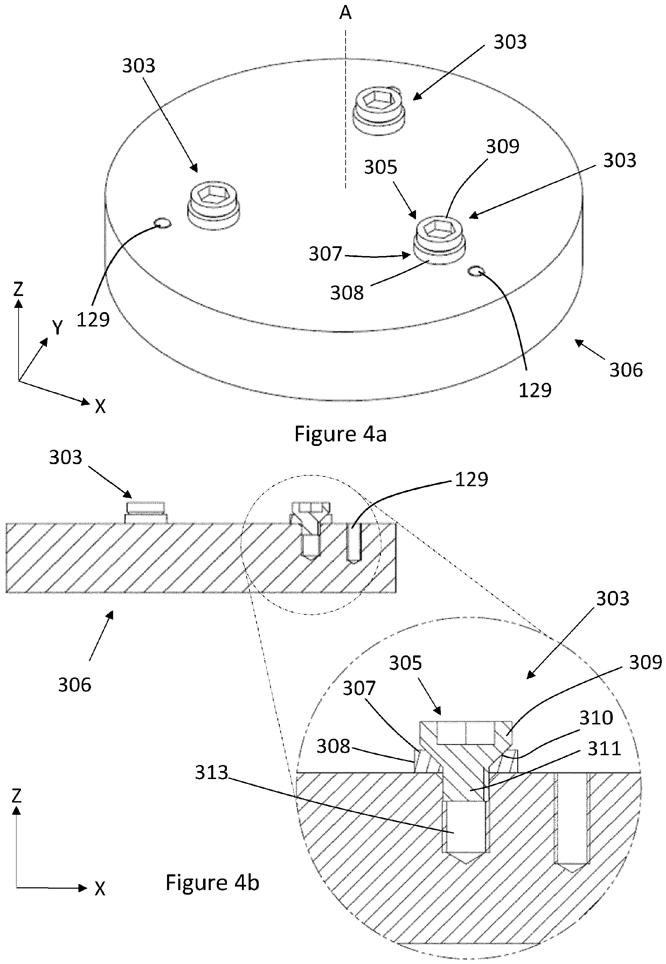

Figures 4a to 4d depict another variation of apparatus suitable for use with the present invention. Like parts share like reference numerals. In this embodiment, the part 306 does not comprise a protruding shaft. Accordingly, rather than a single unitary intermediate scale-positioning member being provided, in this embodiment, there are three separate intermediate scale-positioning members 303 which are provided at annularly spaced locations around the axis of rotation A, the radial configuration of each of which can be manipulated independently, as described in more detail below.

As shown in Figures 4a and 4b, an intermediate scale-positioning member 303 of this embodiment comprises a bolt 305 and a ring 307. The bolt 305 comprises a tapered head 309 and a threaded shank 311. The ring 307 comprises a cylindrical outer surface 308 and a tapered inner surface 310, against which the tapered head 309 engages. The threaded shank 311 of each bolt 305 is threadingly engaged with a corresponding threaded hole 313 in the part 306, with the ring 307 trapped between the tapered head 309 of the bolt 305 and the part 306. Together, the cylindrical outer surfaces 308 of the three intermediate scale-positioning members 303 provide an arrangement onto which the disc scale member 4 can be fitted. Accordingly, in line with the present invention, it can be desired to manipulate the radial configuration of the three intermediate scale-positioning members 303 to a desired radial configuration (e.g. by manipulating at least one of the intermediate scale-positioning members 303 in a manner described below) such that when the disc scale member 4 is fitted to the three intermediate scale-positioning members 303, the disc scale member 4 will be located at a desired radial location/position with respect to the axis of rotation A of the part (e.g. such that the scale axis S and the axis of rotation A are substantially co-axial).

The radial configuration of each of the intermediate scale-positioning members 303 can be manipulated by the tightening of the bolt 305 thereof. Tightening of the bolt 305 causes the bolt 305 to be axially driven further into the part (in the Z-dimension), which will cause the ring 307 to be stretched outwards, thereby increasing its effective diameter, changing the radial position of the point of engagement of the ring 307 and the disc scale member 4 when it is fitted thereon.

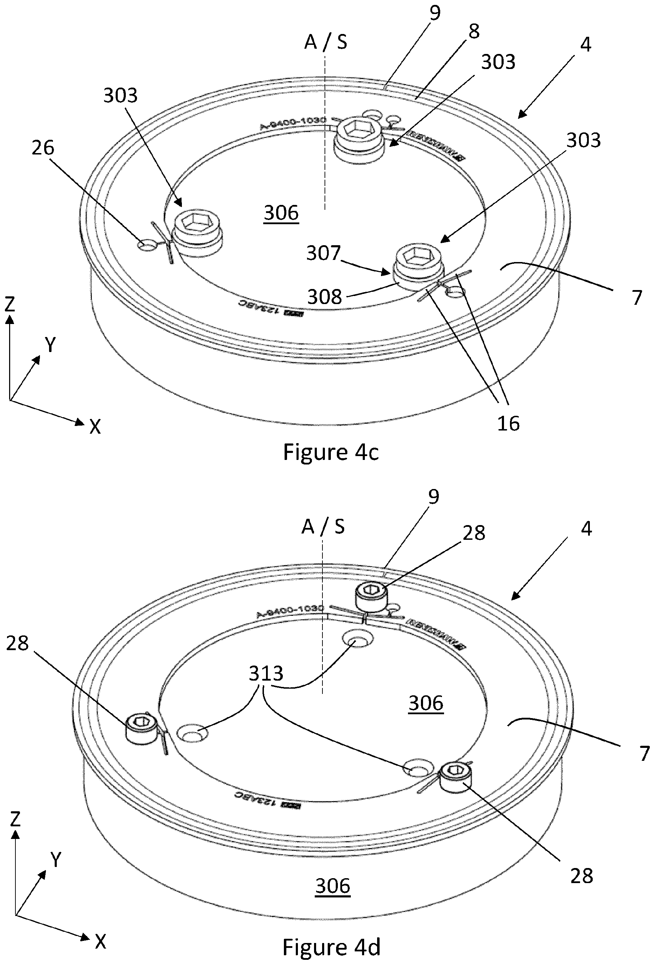

As with the first and second embodiments described above in connection with Figures 2 and 3, the radial configuration of the intermediate scale-positioning members 303 can be checked, e.g. measured, to verify that they provide the desired radial configuration. If not, further manipulation of one or more of the intermediate scale-positioning members 303 can take place until they provide the desired radial configuration. Once they provide the desired radial configuration, then as shown in Figure 4c, the disc scale member 4 can be fitted onto the outer cylindrical surfaces 308 of the rings 307 of the three intermediate scale-positioning members 303. As per the embodiments of Figures 2 and 3, the default inner diameter of the hole 14 defined by the cantilevered spring members 16 of the disc scale member 4 is smaller than the effective diameter defined by the radially outermost points of the outer cylindrical surfaces 308 of the rings 307 of the three intermediate scale-positioning members 303. Accordingly, in this embodiment, fitting the rotary scale member 4 onto the three intermediate scale-positioning members 303 comprises force-fitting the rotary scale member 4 onto the rings 307 of the intermediate scale-positioning members 303. Upon said fitting, the cantilevered spring members 16 will radially engage, and be radially outwardly displaced by, the rings 307 of the three intermediate scale-positioning members 303, whereby the body 7 (and hence the scale 8 and the scale axis S) of the disc scale member 4 will be caused to automatically adopt (in other words, radially located at/be biased to/constrained at) a default (predetermined) radial location/position with respect to the three intermediate scale-positioning members 303. In line with the above-described intention of the method of the invention, owing to the configuration of the disc scale member 4, and due to the deliberate manipulation of the radial configuration of the three intermediate scale-positioning members 303, when the disc scale member 4 adopts its default (predetermined) radial location/position with respect to the three intermediate scale-positioning members 303, the scale axis S should be at a predetermined desired location/position with respect to the axis of rotation A, e.g. substantially coaxial therewith. Accordingly, no further adjustment of the radial configuration of the disc scale member 4 should be necessary.

As depicted in Figure 4d, if desired, the body 7 of the disc scale member 4 can be secured to the part 306, e.g. via adhesive (not shown) and/or via mechanical fasteners, such as bolts 28 which can threadingly engage threaded holes 129 (see Figures 3a and 3b) in the part 306. Furthermore, optionally, the three intermediate scale-positioning members 303 can be removed.

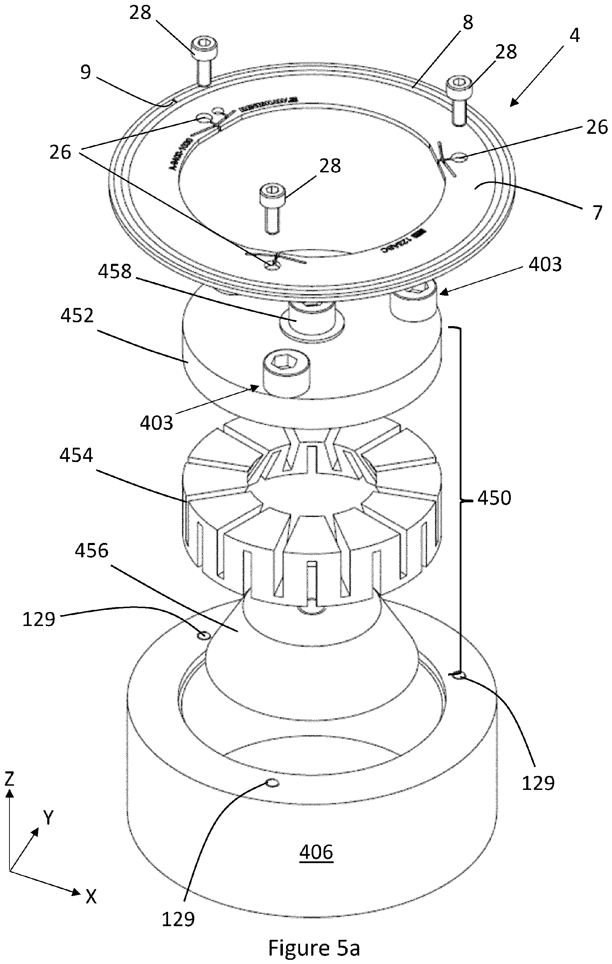

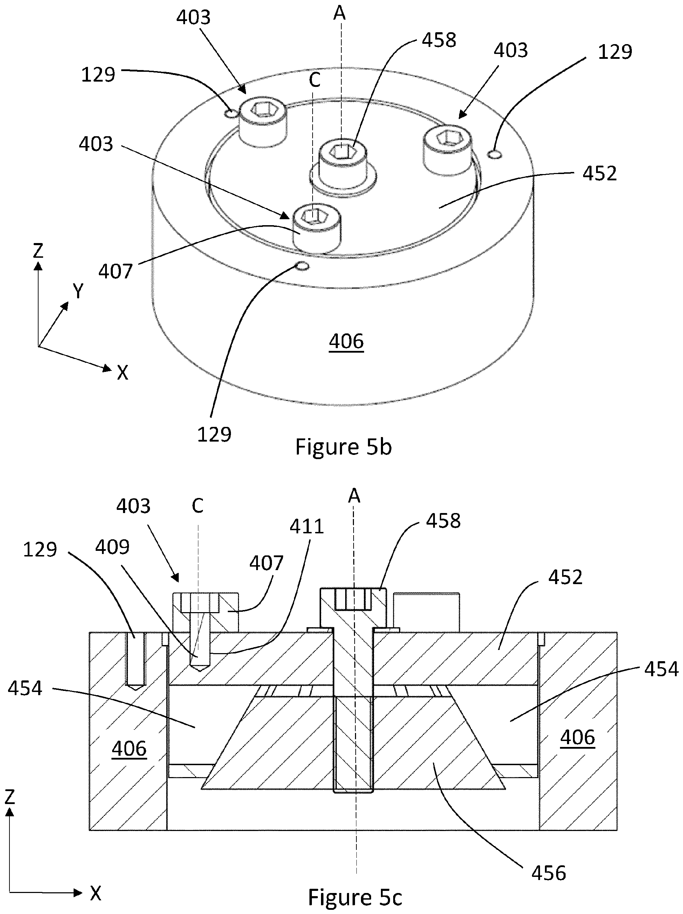

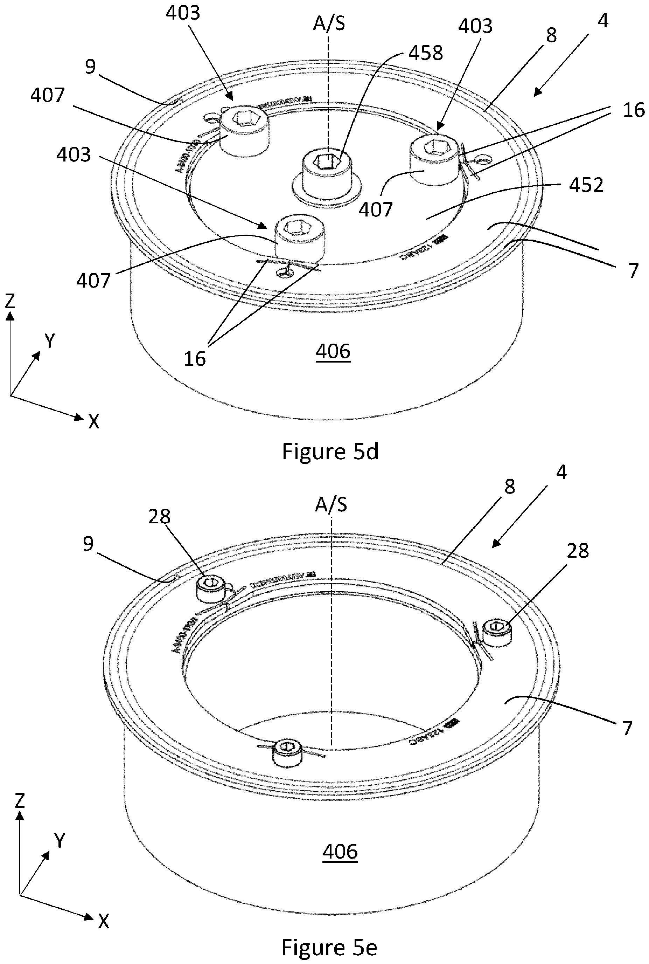

In the embodiment described above, three intermediate scale-positioning members 303 are used, but as will be understood, only two could be used, or more than three intermediate scale-positioning members could be used, if desired. The multiple intermediate scale-positioning members 303 could also take a different form, which enables manipulation of their radial configuration in other ways. For example they could take the form of an offset cam member, like that described in connection with Figure 5 below. In other embodiments, the intermediate scale-positioning members 303 could be interconnected via a rigid linkage such that they can be handled and/or mounted to the part as one (but wherein their radial configuration can still be manipulated independently of each other, for example). In another embodiment, not all of the intermediate scale-positioning members need to be radially adjustable, for example such as the embodiment described below in connection with Figure 8 .

Figures 5a to 5e depict another variation of apparatus suitable for use with the present invention. Like parts share like reference numerals. In this embodiment, the part 406 does not comprise a protruding shaft, nor an appropriate surface/body on which to directly mount one or more intermediate scale-positioning members. Rather, the part 406 is a hollow ring-like member. Accordingly, in this embodiment a support device 450 is provided, which, as described in more detail below, can be secured to the part 406 and provides a support plate 452 onto which can be secured one or more intermediate scale-positioning members (in this case three intermediate scale-positioning members 403) the radial configuration of which can be manipulated. Accordingly, in this embodiment, the one or more intermediate scale-positioning members are indirectly arranged/mounted on the part via the support device 450.

As shown in Figure 5a, the support device 450 comprises a support plate 452, a radially expandable clamp part 454, a tapered member 456 and a bolt 458. The bolt passes through support plate 452, radially expandable clamp part 454 and is threadingly engaged with a threaded bore in the tapered member 456. The three intermediate scale-positioning members 403 could be preinstalled on the support plate 452 or could be provided and mounted separately. The support device 450 is mounted to the part 406 by inserting the support plate 452, radially expandable clamp part 454, and tapered member 456 into the hollow shaft 406. The bolt 458 is then tightened, whereby, due to the bolt's axial position being fixed by the interaction between its head and the support plate 452, the tapered member 456 is pulled axially upward (in the Z-dimension), which in turn causes the expandable clamp part 454 to splay radially outwardly, until it engages the part 406, thereby radially clamping the support device 450 to the inside of the part 406.

In this embodiment, the intermediate scale-positioning members 403 each comprise an offset-cam member. Accordingly, each intermediate offset-cam member 403 comprises a cylindrical head part 405 and a cylindrical pin part 407. The cylindrical pin part 407 is received within and rotatable within a hole 411 in the support plate, such that the intermediate offset-cam member 403 can be rotated about an axis C. The axis C is offset from the geometric centre of the cylindrical head 405. Accordingly, the radial position of the radially-outermost point of the cylindrical head 405 (relative to the part's 406 axis of rotation A) can be changed by rotating the intermediate scale-positioning member 403 about the intermediate scale-positioning member's axis of rotation C.

As with the first, second and third embodiments described above in connection with Figures 2, 3 and 4, the radial configuration of the intermediate scale-positioning members 403 can be checked, e.g. measured, to verify that they provide the desired radial configuration. If not, further manipulation of one or more of the intermediate scale-positioning members 403 can take place until they provide the desired radial configuration. Once they provide the desired radial configuration, then as shown in Figure 5d, the disc scale member 4 can be fitted onto the heads 407 of the intermediate offset-cam members 403. As per the embodiments of Figures 2, 3 and 4, the default inner diameter of the hole 14 defined by the cantilevered spring members 16 of the disc scale member 4 is smaller than the effective diameter defined by the radially-outermost points of the heads 407 of the intermediate offset-cam members 403. Accordingly, in this embodiment, fitting the rotary scale member 4 onto the intermediate offset-cam members 403 comprises force-fitting the rotary scale member 4 onto the heads 407 of the intermediate offset-cam members 403. Upon said fitting, the cantilevered spring members 16 will radially engage, and be radially outwardly displaced by the heads 407 of the intermediate offset-cam members 403, whereby the body 7 (and hence the scale 8 and the scale axis S) of the disc scale member 4 will automatically adopt (in other words, radially located at/be biased to/constrained at) a default (predetermined) radial location/position with respect to the intermediate offset-cam members 403. In line with the above-described intention of the method of the invention, owing to the configuration of the disc scale member 4, and due to the deliberate manipulation of the radial configuration of the intermediate offset-cam members 403, when the disc scale member 4 adopts its default (predetermined) radial location/position with respect to intermediate offset-cam members 403, the scale axis S should be at a predetermined desired location/position with respect to the axis of rotation A, e.g. substantially coaxial therewith. Accordingly, no further adjustment of the radial configuration of the disc scale member 4 should be necessary.

As depicted in Figure 5e, if desired, the body 7 of the disc scale member 4 can be secured to the part 406, e.g. via adhesive (not shown) and/or via mechanical fasteners, such as bolts 28 which can threadingly engage threaded holes 129 (see Figures 5a, 5b and 5c) in the machine part 406. Furthermore, optionally, the intermediate offset cam members 303 can be removed.

In the embodiment described above, three intermediate offset cam members 403 are used, but as will be understood, only two could be used, or more than three intermediate scale-positioning members could be used, if desired. The intermediate scale-positioning members 403 could also take a different form, which enables manipulation of their radial configuration in other ways, such as for example by taking the form of the intermediate scale-positioning members shown in Figure 4. Furthermore, the intermediate scale-positioning members 403 do not need to be identical, rather a combination of different types of intermediate scale-positioning member could be used. Further still, rather than providing multiple separate intermediate scale-positioning members on the support device 405 of Figure 5, the support device 405 could be configured to receive just a unitary intermediate scale-positioning member, such as the intermediate annular ring member of Figures 2 or 3 (e.g. the support plate 452 could comprise a protruding shaft onto which the intermediate annular ring member of Figures 2 or 3 could be received).

In the embodiments described above the rotary scale member's mounting features (e.g. the cantilevered springs 16) are provided radially inward of the scale track 8. However, as will be understood, this need not necessarily be the case, and the mounting features could be provided radially outward of the scale track 8. Accordingly, in contrast to the above-described embodiments, the disc scale member could be fitted to the at least one intermediate scale-positioning member such that it sits radially inside a space defined by the at least one intermediate scale-positioning member.

In the embodiments described above, the rotary scale member comprises a disc scale member, wherein the scale track and features are provided on a planar face thereof. As will be understood, this need not necessarily be the case. For example, the rotary scale member could comprise a ring scale member, wherein the scale track and features are provided on an axially-extending outer cylindrical circumference of the body of the rotary scale member.

In the embodiments described above, the rotary scale member comprises integral resiliently compliant (e.g. spring) members (in particular, cantilevered springs/flexures) which are configured to cause the body of the rotary scale member to automatically adopt (in other words, radially located at/be biased to/constrained at) a default (predetermined) radial location/position with respect to the one or more intermediate scale-positioning members. As will be understood, other configurations are possible to achieve the same function. For instance, non-integral resiliently compliant members could be provided (e.g. resiliently compliant members which are formed separately to, and attached to the body of the rotary scale member, or the intermediate scale-positioning member(s)). Further still, in another embodiment, the one or more intermediate scale positioning members could comprise the resiliently compliant members. For example, such an embodiment is shown in Figure 7 which is a modified version of the embodiment of Figure 2, wherein like parts share like reference numerals. Accordingly, like the embodiment of Figure 2, the intermediate scale-positioning member 103' of Figure 7 comprises a metallic ring having a tapered inner circumferential surface and a generally cylindrical outer circumferential surface. However, in the embodiment of Figure 7 three radially protruding leaf-spring flexures 104 are provided on the generally cylindrical outer circumferential surface of the intermediate scale-positioning member 103' at annularly spaced locations, and are radially resiliently displaceable into an elongate hole 121 which extends axially through the intermediate scale-positioning member 103'. The tapered inner circumferential surface is mounted on an opposingly tapered surface of the shaft 106'. Therefore, in the same manner as that described above in connection with Figure 2, the radial configuration of the intermediate scale-positioning member 103' can be adjusted by tightening one or more of the adjustment bolts 111. Once the operator is happy with the radial configuration of the intermediate scale-positioning member 103', the rotary scale member 4' (in this embodiment a scale disc member having a plain circular inner circumferential surface) can be force-fitted onto the intermediate scale-positioning member's 103' three radially protruding leaf-spring flexures 104, whereby the three radially protruding leaf-spring flexures 104 are radially inwardly displaced and in response urge the rotary scale member 4' via a reaction force into engagement with the intermediate scale-positioning member 103', such that the body 7 of the rotary scale member 4' automatically adopts (in other words, is radially located at/ biased to/constrained at) the default (predetermined) radial location/position with respect to the intermediate scale-positioning member 103'.

As will be understood, although in most of the above-described embodiments the resiliently compliant members comprise cantilevered springs/flexures, non-cantilevered flexures could be used in place of the cantilevered flexures, e.g. leaf flexures like those used on the second annular ring member 212 of Figure 3c, or on the intermediate scale member 103' of Figure 7, could be used. Further still, other types of resiliently compliant members could be used, such as helical springs. Furthermore, it is not essential that the rotary scale member's mounting features are resiliently compliant members, because there are other ways of ensuring that the body 7' (and hence the scale 8 and the scale axis S) of a rotary scale member 4 automatically adopts a default (predetermined) radial location/position with respect to its one or more intermediate scale-positioning member. For example, with reference to the embodiment of Figure 2, in a manner similar to the corresponding tapered surfaces 105, 107 of the intermediate annular ring member 103 and the shaft 106', the outer circumferential surface 107 of the intermediate annular ring member 103, and an inner circumferential surface of the disc scale member 4 can have opposingly tapered surfaces which will cause them to fit together at a default (predetermined) radial location/position with respect to each other.

In the embodiments described above, three resiliently compliant members are provided on the rotary scale member or intermediate scale-positioning member(s). However, this need not necessarily be the case. For instance, Figure 8 illustrates an embodiment whereby only single resiliently compliant member is provided. In this embodiment, the part 306 is the same as that shown in, and described above in connection with, Figure 4. In this embodiment, there are provided first 503 and second 504 cam-shaped intermediate scale-positioning members and a third intermediate scale-positioning member 505, threadingly engaged to the threaded holes 313 in the part 306. Similar to the offset-cam members of Figure 5, the radial position of the radially-outermost point of the head of the first 503 and second 504 cam-shaped intermediate scale-positioning members (relative to the part's 306 axis of rotation A) can be changed by rotating the intermediate scale-positioning member about the cam-shaped intermediate scale-positioning member's axis of rotation C. In this embodiment, the radial configuration of the third intermediate scale-positioning member 505 is not manipulable. Rather, the third intermediate scale-positioning member 505 comprises a plain, circular-headed bolt, having a fixed and non-changeable diameter. However, as will be understood, in another embodiment, the radial configuration of the third intermediate scale-positioning member 505 could be manipulable, for example by way of being a cam member. In other embodiments, the rotary scale member 4" of Figure 8 could be used with any of the above-described intermediate scale-positioning members.

In the embodiment of Figure 8, the rotary scale member 4" differs to those described above in that it is configured with first 20 and second 21 rigid surfaces which engage the first 503 and second 504 cam-shaped intermediate scale-positioning members (when the rotary scale member 4" is fitted to the intermediate scale-positioning members) and a flexure member 22 which engages the third intermediate scale-positioning member 505. Similar to the above embodiments, the rotary scale member 4" is force-fitted to the intermediate scale-positioning members, whereby the flexure member 22 will be radially displaced in the space/hole 23 provided behind the flexure member 22, and will thereby urge the rotary scale member 4" via a reaction force into engagement with the intermediate scale-positioning members 503, 504, 505, such that the body 7" of the rotary scale member automatically adopts(in other words, is radially located at/ biased to/constrained at) a default (predetermined) radial location with respect to the one or more intermediate scale-positioning members, which in this embodiment is defined/controlled by the first 20 and second 21 rigid surfaces. As will be understood, in an alternative embodiment, the third intermediate scale-positioning member could be omitted and the flexure member 22 could engage an integral part of the part 306 (e.g. a shaft or protruding pin) which extends through the hole 14 in the rotary scale member 4". In an alternative embodiment, in a manner similar to the embodiment of Figure 7, the third intermediate scale-positioning member 505 could comprise a resiliently compliant member, in which case the disc could be a fully rigid disc (i.e. the flexure member 22 is replaced with a third rigid surface).

In the embodiments described, the rotary scale member 4 is an optical rotary scale member, but this need not necessarily be the case. For instance, the rotary scale member could be a magnetic, inductive or capacitive rotary scale member. Furthermore, in the embodiment described, the rotary scale member 4 is a reflective optical rotary scale member (in that the light from the readhead is reflected by the scale back toward the readhead, and in that the readhead's illumination and scale detection components are on the same side of the scale). However, this need not necessarily be the case, and the rotary scale member could be a transmissive rotary scale member.

In embodiments described, the rotary scale member is an incremental rotary scale member. Accordingly, the scale track comprises a series of periodically arranged features which the readhead 10 can read in order to provide a count of the relative position/movement of the rotary scale member and a readhead. As is common in the field of incremental encoder apparatus, the rotary scale member could comprise one or more reference marks which can be read by a readhead when it passes the readhead, so that the readhead can identify a reference position on the rotary scale member. An example reference mark 9 is shown in the figures which show the rotary scale member (e.g. see Figures 2c, 2d, 2e). In this case, the reference mark 9 is shown in the same track 8 as the incremental scale features, but this need not necessarily be the case; the reference mark 9 could be provided in a separate track adjacent the incremental scale track 8 (e.g. as illustrated in Figure 7). Of course, the rotary scale member could be an absolute rotary scale member instead of an incremental rotary scale member, wherein the scale track 8 comprises features defining a series of unique absolute positions such that the absolute position of the rotary scale member and a readhead can be determined on start-up without requiring relative motion of the rotary scale member and the readhead.

In the embodiments described above, in accordance with the main and first aspect of the invention, the rotary scale member is fitted to the one or more intermediate scale-positioning members after the intermediate scale-positioning members have been manipulated to their desired radial configuration. Doing so provides a simple and effective way for an operator/installer to compensate for any offset between the axis of rotation and the geometric centre of the part/shaft on which the rotary scale member is to be fitted. For instance, manipulation (and any checking) of the radial configuration can be done without the rotary scale member being in place, which can make access easier for the manipulation (and any checking) of the radial configuration, and can help to avoid damage to the rotary scale member during manipulation (and any checking) of the radial configuration. Also, the ease of manufacture of the rotary scale member can be improved because it is not necessary to provide an accurate surface thereon for checking the radial configuration.

In accordance with a different, second aspect of the invention, the rotary scale member can be fitted onto the one or more intermediate scale-positioning members, via resiliently compliant members which are configured to radially locate/position the rotary scale member at a default (predetermined) radial location/position with respect to the intermediate scale-positioning members, during or before the manipulation (and any checking) of the radial configuration of the one or more intermediate scale-positioning members. For instance, the one or more intermediate scale-positioning members could be mounted on the part of the apparatus, then the rotary scale member could then be fitted onto the one or more intermediate scale-positioning members (via resiliently compliant members which are configured to radially locate/position the rotary scale member at a default (predetermined) radial location/position with respect to the intermediate scale-positioning members), and then the radial configuration of at least one of the one or more intermediate scale-positioning members can be manipulated subsequently until a desired radial configuration of the one or more scale-positioning intermediate scale-positioning members with respect to the axis of rotation is achieved. Alternatively, the rotary scale member can be fitted onto the one or more intermediate scale-positioning members (via resiliently compliant members which are configured to radially locate/position the rotary scale member at a default (predetermined) radial location/position with respect to the intermediate scale-positioning members) before the one or more intermediate scale-positioning members is/are mounted on the part. Although, this second aspect of the invention does not have the above-mentioned benefits of the main and first aspect of the invention, there are benefits to the second aspect over existing known techniques for mounting a rotary scale member. In particular, the resiliently compliant members can help to isolate the rotary scale member from any significant form or shape deformations which might otherwise be imparted on the rotary scale member via the manipulation of the radial configuration of the one or more intermediate scale-positioning members, whilst ensuring that the rotary scale member self-locates at/adopts a default (predetermined) radial location/position with respect to the one or more intermediate scale-positioning members.

## Claims

1. A method of mounting a rotary scale member on a first part of an apparatus, wherein the first part and a second part of the apparatus are relatively rotatable about an axis of rotation, the rotary scale member comprising a body on which a series of scale features defining a scale that extends around a scale axis is or can be provided, the method comprising:
i) mounting on the first part one or more intermediate scale-positioning members and manipulating the radial configuration of at least one of the one or more intermediate scale-positioning members until a desired radial configuration of the one or more scale-positioning intermediate scale-positioning members with respect to the axis of rotation is achieved; and
ii) subsequently fitting the rotary scale member onto the one or more intermediate scale-positioning members, whereby the body of the rotary scale member is radially located at a default radial location with respect to the one or more intermediate scale-positioning members.

2. A method as claimed in claim 1, comprising:
iii) subsequently securing the body of the rotary scale member so as to fix its radial location with respect to the part.

3. A method as claimed in claim 2, comprising:
iv) removing the one or more intermediate scale-positioning members.

4. A method as claimed in any preceding claim, in which step i) comprises checking the radial configuration of the one or more intermediate scale-positioning members.

5. A method as claimed in claim 4, in which checking comprises determining the position of at least a part of the one or more intermediate scale-positioning members in order to determine the radial configuration thereof.

6. A method as claimed in any preceding claim, in which the rotary scale member is fitted to the one or more intermediate scale-positioning members via one or more resiliently compliant members.

7. A method as claimed in claim 6 , in which step ii) comprises force-fitting the rotary scale member and the at least one intermediate scale-positioning member together, whereby the one or more resiliently compliant members are displaced and thereby urge the rotary scale member via a reaction force into engagement with the one or more intermediate scale-positioning members, such that the body of the rotary scale member is thereby radially located at the default radial location with respect to the one or more intermediate scale-positioning members.

8. A method as claimed in any preceding claim, in which step i) comprises arranging on the part, at at least two annularly spaced locations around the axis of rotation, separate intermediate scale-positioning members, the radial configuration of at least one of which can be manipulated independently of the other(s).

9. A method as claimed in any of claims 1 to 7, in which step i) comprises arranging on the part a unitary intermediate scale-positioning member which provides, at at least three annularly spaced locations around the axis of rotation, a surface for receiving the rotary scale member.

10. A method as claimed in claim 9, in which the unitary intermediate scale-positioning member comprises an annular intermediate scale-positioning member comprising a substantially circular surface for receiving the rotary scale member.

11. A method as claimed in any preceding claim, in which the desired radial configuration of the one or more intermediate scale-positioning members is that configuration which ensures that when the rotary scale member is fitted thereon at step ii), the scale axis and axis of rotation of the part are substantially co-axial.

12. A method of mounting a rotary scale member on a first part of an apparatus, wherein the first part and a second part of the apparatus are relatively rotatable about an axis of rotation, the rotary scale member comprising a body on which a series of scale features defining a scale that extends around a scale axis is or can be provided, the method comprising, in any suitable order:
i) mounting on the first part one or more intermediate scale-positioning members;
ii) fitting the rotary scale member onto the one or more intermediate scale-positioning members via one or more resiliently compliant members which are configured to radially locate the rotary scale member at a default radial location with respect to the intermediate scale-positioning members;
iii) manipulating the radial configuration of at least one of the one or more intermediate scale-positioning members mounted on the part until a desired radial configuration of the one or more scale-positioning intermediate scale-positioning members with respect to the axis of rotation is achieved.

13. A method as claimed in claim 12, in which step ii) takes place before step iii).

14. An apparatus comprising:
one or more intermediate scale-positioning members configured for mounting on a first part of a device having said first part and a second part which are relatively rotatable about an axis of rotation, configured such that the radial configuration of at least one of the one or more intermediate scale-positioning members is manipulable with respect to said axis of rotation; and
a rotary scale member comprising a body on which a series of scale features defining a scale that extends around a scale axis is or can be provided, the rotary scale member being fittable to the one or more intermediate scale-positioning members such that the radial position of the rotary scale member with respect to the axis of rotation is controlled by the one or more intermediate scale-positioning members;
**characterised in that** the rotary scale member is fittable to the one or more intermediate scale-positioning members via one or more resiliently compliant members which are configured to radially locate the rotary scale member at a default radial location with respect to the intermediate scale-positioning members when the rotary scale member is fitted to the one or more intermediate scale-positioning members.

15. An apparatus as claimed in claim 14, in which the rotary scale member is fittable to the one or more intermediate scale-positioning members via at least three resiliently compliant members, which are located at different, for example substantially equiangular, positions around the scale axis.

16. An apparatus as claimed in claim 14 or 15, in which the resiliently compliant members comprise flexures.

17. An apparatus as claimed in any of claims 14 to 16, in which the rotary scale member comprises the resiliently compliant members.

18. An apparatus as claimed in any of claims 14 to 17, further comprising means for securing the rotary scale member to the part independently of the one or more intermediate scale-positioning members.
